# FASCICULE DE BREVET EUROPEEN

(11) **EP 0 767 028 B1**
(45) Date de publication et mention de la délivrance du brevet: **05.01.2000**
(21) Numéro de dépôt: 96402107.5
(22) Date de dépôt: 03.10.1996
(51) Int. Cl.: B23K 35/00, B23K 20/16, B23K 35/32

(54) **Procédé d'assemblage par frittage réactif de pièces en matériau intermétallique et application dérivées**
Verfahren zum Verbinden von intermetallischen Material durch Reaktionssinterung und abgeleitete Anwendungen
Process for joining intermetallic materials by reaction sintering and derived applications

(30) Priorité: 04.10.1995 FR 9511650
(43) Date de publication de la demande: 09.04.1997
(73) Titulaire: SOCIETE NATIONALE D'ETUDE ET DE CONSTRUCTION DE MOTEURS D'AVIATION, "S.N.E.C.M.A.", 75015 Paris (FR); COMMISSARIAT A L'ENERGIE ATOMIQUE, 75015 Paris Cédex 15 (FR)
(72) Inventeur: Bigay, Yves, 91370 Verrieres le Buisson (FR); Lasalmonie, Alain, 94240 L'Hay les Roses (FR)

(56) Documents cités:
- EP-A- 0 155 490
- EP-A- 0 650 798
- GB-A- 955 675
- US-A- 3 335 002
- US-A- 3 716 347
- US-A- 5 318 214
- PATENT ABSTRACTS OF JAPAN vol. 16, no. 207 (C-941) 18 Mai 1992 & JP-A-04 037 658 (NHK SPRING CO) 07 Février 1992

## Description

La présente invention concerne un procédé d'assemblage et liaison par frittage réactif de pièces en matériau intermétallique. Elle concerne également certaines applications dérivées utilisant un revêtement ou destinées à la réalisation d'une réparation.

Divers matériaux intermétalliques ont été développés présentant des propriétés intéressantes et des avantages d'utilisation pour certaines applications particulières, notamment dans le domaine aéronautique, par rapport aux alliages ou superalliages métalliques classiques. On trouve notamment parmi ces composés TiAl, TiNi, NiAl, FeAl ou Ti₃Al. Ces matériaux ont été mis en forme par fonderie ou par forgeage. US 4 294 615 décrit par exemple un matériau TiAl de ce type.

Toutefois l'assemblage des pièces obtenues présente des difficultés particulières qui ont été insuffisamment résolues. En effet, les techniques d'assemblage connues et appliquées aux matériaux classiques, alliages ou superalliages métalliques, se révèlent mal adaptées à ces nouveaux matériaux intermétalliques. Notamment, les procédés d'assemblage avec fusion, avec ou sans métal d'apport, du type soudage par faisceau d'énergie, faisceau d'électrons ou faisceau laser ou à l'arc électrique par procédé TIG ont l'inconvénient de modifier profondément la structure métallurgique du matériau et sont donc particulièrement difficiles à utiliser dans les matériaux fragiles que sont les composés intermétalliques. De même, lors d'assemblage au moyen de procédés du type brasage et brasage-diffusion, le métal d'apport a un point de fusion inférieur à celui du métal de base, ce qui ne permet pas d'assurer la continuité métallurgique de l'assemblage et peut en limiter les domaines d'usage en particulier en température. Certains autres procédés comme le soudage-diffusion et le soudage par friction prévoient de réaliser l'assemblage à l'état solide. Toutefois, le soudage-diffusion nécessite des surfaces d'accostage possédant une qualité géométrique parfaite et un contrôle très contraignant des conditions de propreté et de cycle thermique. Le soudage par friction demande des qualités rhéologiques particulières et se prête mal à un certain nombre de configurations d'assemblage.

Le document JP-A-4037658 décrit un procédé d'assemblage de deux éléments dont au moins l'un est constitué dún matériau intermétallique comportant les étapes suivantes:
- mélange de poudres élementaires;
- mise en place d'un élément intermédiaire obtenu à partir des poudres élementaires entre les surfaces des éléments á assembler;
- traitement de l'ensemble obtenu au four pour obtenir un frittage de l'élément intermédiaire et une consolidation de l'ássemblage.

Un des buts de l'invention est la mise au point d'un procédé d'assemblage de pièces en matériau intermétallique ne présentant pas les inconvénients des procédés connus antérieurs et assurant un standard suffisant de qualité notamment tel qu'il est requis dans le domaine aéronautique. Un procédé d'assemblage de deux éléments dont au moins l'un est constitué d'un matériau inter métallique répondant à ces conditions est caractérisé en ce qu'il comporte les étapes suivantes :
a) mélange de poudres élémentaires de manière à obtenir une composition globale correspondant à celle d'un composé intermétallique du même type que ledit matériau intermétallique,
b) compaction et mise en forme d'un élément intermédiaire à partir du mélange obtenu à l'étape a), à une température inférieure à la température de frittage réactif du composé,
c) mise en place dudit élément intermédiaire entre les surfaces des éléments à assembler,
d) traitement de l'ensemble obtenu à l'étape c) au four suivant un premier cycle thermique dont les conditions de température, de pression et de durée sont déterminées de façon à obtenir un frittage réactif de l'élément intermédiaire et une consolidation de l'assemblage,
e) traitement de diffusion suivant un second cycle thermique au four à une température plus élevée qu'à l'étape d) et dans des conditions déterminées pour consolider mécaniquement l'assemblage.

L'utilisation à l'étape c du procédé conforme à l'invention de l'élément intermédiaire constituant un matériau d'apport obtenu aux étapes a et b présente de nombreux avantages et notamment :
- la composition moyenne du matériau d'apport peut être identique à celle du matériau de base ou peut être adaptée aux exigences globales d'utilisation de l'assemblage ;
- le matériau d'apport dans la forme prévue par l'invention présente une ductilité initiale qui lui permet de s'accommoder des défauts d'accostage et de préparation des joints de l'assemblage ;
- au cours de l'étape d du procédé conforme à l'invention, le frittage réactif des poudres élémentaires transforme le matériau d'apport en un composé intermétallique qui peut avantageusement être identique aux matériaux à assembler ou adapté aux exigences particulières d'utilisation de l'assemblage ;
- au cours de l'étape e du procédé conforme à l'invention une liaison métallurgique de qualité adéquate est obtenue par diffusion sous pression.

D'autres caractéristiques et avantages de l'invention seront mieux compris à l'aide de la description ci-après de quelques exemples d'application du procédé d'assemblage selon l'invention.

Une première séquence remarquable du procédé d'assemblage conforme à l'invention de deux éléments dont au moins l'un est constitué d'un matériau intermétallique permet la réalisation d'un matériau d'apport et comporte les deux étapes suivantes :
a) mélange de poudres élémentaires de manière à obtenir une composition globale correspondant à celle d'un composé intermétallique du même type que ledit matériau intermétallique à assembler ;
b) compaction et mise en forme d'un élément intermédiaire à partir du mélange obtenu à l'étape a.

Ledit élément intermédiaire peut notamment être obtenu en réalisant des rubans ou tôles laminés par filage et/ou laminage à l'épaisseur souhaitée, effectué à une basse température, inférieure à la température de frittage réactif du composé. Une compaction directe aux côtes souhaitées peut également être réalisée ou la compaction peut être suivie d'un usinage. Après cette mise en forme, les dimensions géométriques définitives de l'élément intermédiaire sont obtenues par tout moyen classique tel que découpage, emboutissage etc... La réalisation du mélange et l'obtention du matériau d'apport à partir des poudres élémentaires telles que décrites ci-dessus peuvent être obtenues au moyen de tout procédé connu physico-chimique tel que mélange mécanique projection, coprécipitation de poudres etc...

L'étape suivante c comportant la mise en place dudit élément intermédiaire entre les surfaces des éléments à assembler permet la réalisation de l'assemblage. Le matériau d'apport est alors inséré ou directement déposé entre les deux parties à assembler. L'ensemble peut être pressé à température ambiante ou à une température qui reste inférieure à celle du déclenchement du frittage-réactif pour obtenir un accostage adéquat. La ductilité du matériau d'apport confère une capacité de déformation suffisante pour accommoder les défauts d'accostage.

A l'étape suivante d, l'ensemble obtenu à l'étape c est porté au four et traité suivant un premier cycle thermique dont les conditions de température, de pression qui peut être isostatique ou uniaxiale et de durée sont déterminées de façon à réaliser la transformation du mélange de poudres en composé intermétallique par frittage réactif. Le frittage réactif peut s'effectuer sans fusion selon le type d'intermétallique mis en oeuvre. A l'issue de cette étape on dispose d'un assemblage totalement intermétallique et suffisamment consolidé pour faciliter la manipulation lors de la poursuite des opérations.

Une étape finale e comporte un traitement de diffusion suivant un second cycle thermique au four au cours duquel la liaison réalisée à l'étape précédente d est portée à une température plus élevée qu'à l'étape d, avec ou sans pression, pour poursuivre la diffusion entre la couche intermédiaire et les métaux de base constitutifs de l'assemblage de manière à consolider mécaniquement l'assemblage. Avantageusement, le traitement de diffusion est effectué à une température supérieure à 0,8 T_{f,} T_{f} étant la température absolue de fusion du composé intermétallique utilisé. Dans la mise en oeuvre du procédé en production industrielle, les étapes qui viennent d'être décrites et notamment les étapes d et e de traitement au four peuvent être réalisées en enchaînement continu ou être dissociées, ce qui donne de la souplesse.

### EXEMPLES D'APPLICATION

### EXEMPLE 1

Il s'agit de réaliser un assemblage de deux pièces en TiAl

L'élément intermédiaire de matériau d'apport est réalisé comme suit :
a) pesée des poudres élémentaires dans les proportions suivantes :
   Titane 631 g, Aluminium 341 g, chrome 27,4 g.
   et mélange pendant une heure en turbulat ;
b) la compaction est obtenue par compression uniaxiale du mélange sous une pression de 7 x10² MPa de manière à obtenir des plaques d'épaisseur de 2 mm.

A l'étape c suivante, les pièces de TiAl à assembler sont préparées par usinage suivi d'un nettoyage et l'élément intermédiaire obtenu à l'étape b est inséré entre les deux parties de TiAl à assembler. L'ensemble obtenu est disposé dans une enveloppe en acier doux dans laquelle on effectue le vide puis une fermeture étanche est réalisée. Un jeu très faible, inférieur à 0,5% est ménagé entre l'enveloppe et les pièces à assembler.

Les étapes d et e de traitement au four sont réalisées en enchaînement selon le cycle suivant et sans pression :
- chauffage jusqu'à 600°C et maintien d'une heure pour réaliser le frittage réactif,
- puis chauffage jusqu'à 1200°C et maintien de trois heures pour poursuivre la diffusion et augmenter la consolidation.

L'ensemble est ensuite dégainé.

### EXEMPLE 2

Il s'agit d'une variante de réalisation pour un assemblage de deux pièces en TiAl. L'élément intermédiaire de matériau d'apport est réalisé comme suit :
a) pesée des poudres élémentaires dans les proportions suivantes :
   Titane 631g, Aluminium 341g, chrome 27,4g,
   et mélange pendant une heure en turbulat ;
b) la compaction et mise en forme est réalisée de la manière suivante :
   - compression isostatique du mélange obtenu à l'étape a dans une enveloppe en latex de manière à obtenir une billette de diamètre 50 mm et de hauteur 120 mm ;
   - gainage du comprimé de poudres obtenu par de l'aluminium d'une épaisseur de 10 mm, ce gainage permettant de protéger le comprimé de poudres de l'oxydation pendant les opérations suivantes de transformation ;
   - extrusion à 350°C avec une filière de 35 x 9 mm, le rapport d'extrusion étant de 14 ;
   - laminage à 350°C de manière à obtenir un laminé de 0,5 mm d'épaisseur, dont la composition moyenne correspond à celle du matériau intermétallique Ti₅₀Al₄₈Cr₂,
   - enlèvement de la gaine d'aluminium par cisaillage.

A l'étape c suivante, les pièces de TiAl à assembler sont préparées par usinage suivi d'un nettoyage et l'élément intermédiaire obtenu à l'étape b est inséré entre les deux parties de TiAl à assembler. L'ensemble obtenu est disposé dans une enveloppe de titane dans laquelle on effectue le vide puis une fermeture étanche est réalisée. Les étapes d et e sont réalisées en enchaînement dans une enceinte de compression isostatique à chaud selon le cycle suivant :
- chauffage jusqu'à 600°C et maintien pendant une heure sous une pression de 10²MPa pour réaliser le frittage réactif,
- puis chauffage jusqu'à 1200°C et maintien pendant trois heures sous une pression de 1,5 x 10²MPa pour poursuivre la diffusion et augmenter la consolidation.

L'ensemble est ensuite dégainé.

### EXEMPLE 3

Par rapport à l'exemple 2 précédent, seules les modifications suivantes sont apportées :
- à l'étape b, la billette obtenue est directement soumise à une opération de laminage à 20°C pour obtenir une épaisseur de TiAl de 1 mm
- à l'étape c, l'ensemble est disposé dans un outillage de compression uniaxiale à chaud
- les étapes d et e sont réunies dans un traitement unique effectué dans un four de compression uniaxiale à chaud selon le cycle suivant :

x chauffage jusqu'à 1000°C et maintien pendant deux heures sous une pression de 50MPa de manière à réaliser le frittage réactif et la diffusion.

Diverses variantes de réalisation peuvent être apportées à la réalisation d'assemblage de pièces en TiAl suivant les modalités décrites en référence aux exemples ci-dessus 1, 2 et 3.

Notamment, divers ajustements de composition du matériau d'apport adaptés aux exigences d'utilisation de l'assemblage peuvent être effectués dans le mélange des poudres à l'étape a et les compositions suivantes ont par exemple été testées :
Ti52 Al48 ; Ti48 Al48 Cr2 Nb2; Ti48 Al48 Cr2 Nb1V1,
les pourcentages indiqués étant atomiques.

Par ailleurs, diverses combinaisons des étapes décrites dans les exemples ci-dessus concernant d'une part la réalisation du matériau d'apport suivant les étapes a et b et d'autre part la réalisation de l'assemblage suivant les étapes c, d et e peuvent être réalisées et notamment :
- l'élément intermédiaire de l'exemple 1 peut être utilisé avec les conditions d'assemblage des exemples 2 ou 3 et de même l'élément intermédiaire des exemples 2 et 3 respectivement avec les conditions d'assemblage des exemples 1 ou 3 et 1 ou 2.

### EXEMPLE 4

Il s'agit de réaliser un assemblage de deux pièces en NiAl.

Les conditions de mise en oeuvre du procédé conforme à l'invention sont identiques à celles qui ont été précédemment décrites en référence à l'exemple 2, à l'exception des modifications suivantes :
- les proportions de poudres élémentaires pour la réalisation de l'élément intermédiaire de matériau d'apport sont : Nickel 685g et Aluminium 314g
- l'enveloppe utilisée à l'étape c est en acier.

Pour cet assemblage, les variantes de réalisation précédemment décrites pour l'assemblage de pièces en TiAl, en référence aux exemples 1 et 3 ci-dessus peuvent également être appliquées, d'une part, pour la réalisation du matériau d'apport et d'autre part, pour obtenir le frittage réactif et la consolidation par diffusion.

### EXEMPLE 5

Il s'agit de réaliser un assemblage de deux pièces en TiNi.

Des conditions de mise en oeuvre identiques à celles qui ont été précédemment décrites en référence à l'exemple 4 et les mêmes variantes de réalisation sont applicables à l'exception de la modification suivante :
- les proportions de poudres élémentaires pour la réalisation du métal d'apport à l'étape a sont Nickel 551g, Titane 449g.

### EXEMPLE 6

Il s'agit de réaliser un assemblage de deux pièces en FeAl.

Des conditions de mise en oeuvre identiques à celles des exemples 4 et 5 ainsi que leurs variantes de réalisation sont à nouveau applicables, à l'exception des modifications suivantes:
- les proportions de poudres élémentaires sont Fe 674g, Aluminium 326g
- les températures de chauffage aux deux paliers sont respectivement 600°C et 1100°C.

### EXEMPLE 7

Il s'agit de réaliser un assemblage de deux pièces en Ti₃Al.

A nouveau, les conditions de mise en oeuvre des exemples 4, 5 et 6 sont reprises et leurs variantes de réalisation sont applicables, à l'exception des modifications suivantes :
- les proportions de poudres élémentaires sont Titane 842g, Aluminium 158g
- les températures de chauffage aux deux paliers sont respectivement 600°C et 1000°C.

Le procédé d'assemblage conforme à l'invention permet aussi d'assembler deux éléments en d'autres matériaux intermétalliques que ceux qui ont été utilisés dans les exemples de réalisation décrits ci-dessus, notamment ceux à base de Niobium par exemple.

### EXEMPLE 8

Il s'agit de réaliser un assemblage hétérogène d'un élément en matériau intermétallique et d'un élément en alliage métallique.

Dans cet exemple, un élément en TiAl et un élément en alliage de titane, par exemple TA6V sont assemblés dans des conditions identiques à celles de l'exemple 7, le matériau d'apport utilisé de composition Ti₃Al étant également identique.

En variante de réalisation et afin d'accommoder les déformations et les contraintes, en fonction des applications particulières, deux ou trois couches de matériau d'apport peuvent être appliquées et les compositions retenues sont dans ce cas : TiAl, Ti₃Al et Ti respectivement. Les conditions de réalisation de ces matériaux d'apport restent celles qui ont été précédemment décrites en références aux exemples 1, 2 et 3 au choix et en fonction des applications particulières.

Le procédé d'assemblage conforme à l'invention permet également d'assembler d'autres couples d'éléments, l'un intermétallique et l'autre métallique classique. Les assemblages hétérogènes suivants ont notamment été testés : Ti₃Al + alliage à base titane ; NiAl + alliage à base nickel ; FeAl + alliage à base fer ; TiNi + Alliage à base titane ; TiNi + alliage à base nickel.

### EXEMPLE 9

Le procédé conforme à l'invention permet également dans une application particulière de limiter l'assemblage à la réalisation d'un revêtement sur une pièce ou d'effectuer une réparation de pièce par apport de matériau.

Un revêtement de TiAl ou une réparation par apport de TiAl peuvent ainsi être réalisés dans les conditions de mise en oeuvre précédemment décrites en référence à l'exemple 2, la température de chauffage au deuxième palier étant dans ce cas limitée à 1050°C et le matériau d'apport à l'étape c du procédé au lieu d'être inséré entre deux éléments étant simplement posé sur la pièce à revêtir ou dans la zone de pièce à réparer.

Comme précédemment, les variantes de réalisation précédemment décrites pour l'assemblage de pièces en TiAl, en référence aux exemples 1 et 3, sont également applicables pour la réalisation du revêtement ou de la réparation.

### EXEMPLE 10

Un revêtement de NiAl ou une réparation par apport NiAl sont réalisés dans les conditions de mise en oeuvre précédemment décrites en référence à l'exemple 4, la température de chauffage au deuxième palier étant dans ce cas limitée à 1050°C et le matériau d'apport à l'étape c du procédé au lieu d'être inséré entre deux éléments étant simplement posé sur la pièce à revêtir ou dans la zone de pièce à réparer. Comme précédemment, les variantes de réalisation précédemment décrites pour l'assemblage de deux pièces, en référence aux exemples 1 et 3 sont également applicables pour la réalisation du revêtement ou de la réparation.

Outre les revêtements décrits de TiAl et de NiAl, d'autres revêtements ou réparations à base d'intermétalliques ont été également testés et réalisés dans les mêmes conditions de mise en oeuvre que précédemment décrites dans le cas d'assemblages et notamment Ti₃Al, FeAl et TiNi.

## Revendications

1. Procédé d'assemblage de deux éléments dont au moins l'un est constitué d'un matériau intermétallique comportant les étapes suivantes :
a) mélange de poudres élémentaires de manière à obtenir une composition globale correspondant à celle d'un composé intermétallique du même type que ledit matériau intermétallique;
b) compaction et mise en forme d'un élément intermédiaire à partir du mélange obtenu à l'étape a), à une température inférieure à la température de frittage réactif du composé ;
c) mise en place dudit élément intermédiaire entre les surfaces des éléments à assembler ;
d) traitement de l'ensemble obtenu à l'étape c) au four suivant un premier cycle thermique dont les conditions de température, de pression et de durée sont déterminées de façon à obtenir un frittage réactif de l'élément intermédiaire et une consolidation de l'assemblage ;
e) traitement de diffusion suivant un second cycle thermique au four à une température plus élevée qu'à l'étape d) et dans des conditions déterminées pour consolider mécaniquement l'assemblage.

2. Procédé d'assemblage selon la revendication 1 dans lequel à l'étape a, après pesée des poudres élémentaires, le mélange est effectué dans un turbulat et à l'étape b, la compaction est obtenue par compression uniaxiale du mélange de manière à obtenir des plaques de 2 mm d'épaisseur comprise entre 0,5 et 5 mm.

3. Procédé d'assemblage selon la revendication 1 dans lequel à l'étape a, après pesée des poudres élémentaires, le mélange est effectué dans un turbulat et à l'étape b, le mélange de poudres est soumis à une compression isostatique dans une enveloppe en latex de manière à obtenir une billette de comprimé de poudres puis, on effectue un gainage du comprimé par de l'aluminium d'une épaisseur de 10 mm et ensuite une extrusion à 350°C, suivie d'un laminage à 350°C de manière à obtenir une épaisseur de matériau comprise entre 0,1 et 5 mm et enfin, la gaine d'aluminium est enlevée par cisaillage.

4. Procédé d'assemblage selon la revendication 1 dans lequel à l'étape a, après pesée des poudres élémentaires, le mélange est effectué dans un turbulat et à l'étape b, le mélange de poudres est soumis à une compression isostatique dans une enveloppe en latex de manière à obtenir une billette puis on effectue un laminage à 20°C de manière à obtenir une épaisseur intermétallique comprise entre 0,1 et 5 mm.

5. Procédé d'assemblage selon l'une des revendications 1 à 4 dans lequel à l'étape e, la température du traitement est supérieure à 0,8 T_{f}, T_{f} étant la température absolue de fusion dudit composé intermétallique.

6. Procédé d'assemblage selon l'une quelconque des revendications 1 à 5 dans lequel à l'étape c, les éléments à assembler sont préparés par usinage suivi d'un nettoyage puis l'élément intermédiaire de matériau d'apport est inséré entre les deux éléments à assembler et l'ensemble est disposé dans une enveloppe d'acier doux en ménageant un jeu très faible, inférieur à 0,5% puis on effectue le vide dans l'enveloppe et on réalise une fermeture étanche et à l'étape d, le traitement de frittage réactif est effectué au four à 600°C pendant une heure, sans pression, et à l'étape e, le traitement de diffusion est effectué à 1200°C pendant trois heures, sans pression, l'ensemble étant ensuite dégainé.

7. Procédé d'assemblage selon l'une quelconque des revendications 1 à 5 dans lequel à l'étape c, les éléments à assembler sont préparés par usinage suivi d'un nettoyage puis l'élément intermédiaire de matériau d'apport est inséré entre les éléments à assembler et l'ensemble est disposé dans une enveloppe de titane dans laquelle on effectue le vide puis on réalise une fermeture étanche et à l'étape d, le traitement de frittage réactif au four est effectué à 600°C pendant une heure, sous une pression comprise entre 50 et 150MPa et à l'étape e, le traitement de diffusion est effectué à 1200°C pendant trois heures sous une pression comprise entre 100 et 200 MPa, l'ensemble étant ensuite dégainé.

8. Procédé d'assemblage selon l'une quelconque des revendications 1 à 5 dans lequel à l'étape c, les éléments à assembler sont préparés par usinage suivi d'un nettoyage puis l'élément intermédiaire de matériau d'apport est inséré entre les éléments à assembler et l'ensemble est disposé dans un outillage de compression uniaxiale à chaud, ensuite les étapes d et e sont réunies dans un traitement unique de frittage réactif et diffusion, effectué dans un four de compression uniaxiale à chaud, à la température de 1000°C, pendant deux heures, sous une pression comprise entre 50 et 150MPa.

9. Procédé d'assemblage selon l'une quelconque des revendications 1 à 8 dans lequel les deux éléments à assembler sont des pièces en TiAl et à l'étape a, les poudres élémentaires sont mélangées après pesée dans les proportions suivantes : Titane 631g, Aluminium 341g et Chrome 27,4g.

10. Procédé d'assemblage selon l'une quelconque des revendications 1 à 8 dans lequel les deux éléments à assembler sont des pièces en NiAl et à l'étape a, les poudres élémentaires sont mélangées après pesée dans les proportions suivantes : Nickel 685g, Aluminium 314g.

11. Procédé d'assemblage selon l'une quelconque des revendications 1 à 8 dans lequel les deux éléments à assembler sont des pièces en TiNi et à l'étape a, les poudres élémentaires sont mélangées après pesée dans les proportions suivantes : Nickel 551g et Titane 449g, la température du traitement de frittage réactif étant pour cet assemblage modifiée à 900°C.

12. Procédé d'assemblage selon l'une quelconque des revendications 1 à 8 dans lequel les deux éléments à assembler sont des pièces en FeAl et à l'étape a, les poudres élémentaires sont mélangées après pesée dans les proportions suivantes : Fer 674g et Aluminium 326g, la température du traitement de diffusion étant pour cet assemblage modifiée à 1100°C.

13. Procédé d'assemblage selon l'une quelconque des revendications 1 à 8 dans lequel les deux éléments à assembler sont des pièces en Ti₃Al et à l'étape a, les poudres élémentaires sont mélangées après pesée dans les proportions suivantes : Titane 842g et Aluminium 158g, la température du traitement de diffusion étant pour cet assemblage modifiée à 1000°C.

14. Procédé d'assemblage selon la revendication 13 dans lequel les deux éléments à assembler sont une pièce en TiAl et une pièce en alliage de titane tel que TA6V.

15. Procédé d'assemblage selon la revendication 14 dans lequel l'élément intermédiaire inséré entre les surfaces des pièces à assembler est constitué de trois couches superposées de matériau d'apport, de composition respective TiAl, Ti₃Al et Ti.

16. Procédé d'assemblage selon la revendication 14 dans lequel l'élément intermédiaire inséré entre les surfaces de pièces à assembler est constitué de deux couches superposées de matériau d'apport dont la composition respective est choisie dans le groupe TiAl, Ti₃Al et Ti.

17. Procédé de réalisation d'un revêtement constitué d'un matériau intermétallique pris dans le groupe TiAl, NiAl, Ti₃Al, FeAl, TiNi sur une pièce, comprenant les étapes définies par l'une quelconque des revendications 1 à 8 dans lequel à l'étape c, le matériau d'apport est posé sur la pièce à revêtir.

18. Procédé de réalisation d'une réparation par apport d'un matériau intermétallique pris dans le groupe TiAl, NiAl, Ti₃Al, FeAl, TiNi sur une pièce comprenant les étapes définies par l'une quelconque des revendications 1 à 8 dans lequel à l'étape c, le matériau d'apport est déposé dans la zone de pièce à réparer.

## Claims

1. Method of assembling two elements at least one of which consists of an intermetallic material including the following stages:
a) mixing of basic powders so as to obtain an overall composition corresponding to that of an intermetallic compound of the same type as the said intermetallic material;
b) compacting and shaping of an intermediate element from the mixture obtained at stage a), at a temperature below the reactive-sintering temperature of the compound;
c) shaping of the said intermediate element between the surfaces of the elements to be assembled;
d) treatment of the assembly obtained at stage c) in the furnace according to a first thermal cycle the temperature, pressure and the duration conditions of which are determined in such a way as to obtain reactive sintering of the intermediate element and consolidation of the assembly;
e) diffusion treatment according to a second thermal cycle in the furnace at a temperature higher than at stage d) and under conditions determined so as to consolidate the assembly mechanically.

2. Assembly method according to Claim 1, in which, at stage a, after weighing the basic powders, mixing is carried out in a turbulent mixer and, at stage b, compaction is obtained by uniaxial compression of the mixture in such a way as to obtain 2mm plates with thickness lying between 0.5 and 5 mm.

3. Assembly method according to Claim 1, in which, at stage a, after weighing the basic powders, mixing is carried out in a turbulent mixer and, at stage b, the mixture of powders is subjected to isostatic compression in a latex envelope in such a way as to obtain a billet of powder compact, then the compact is sheathed in aluminium 10 mm thick and is then extruded at 350°C followed by rolling at 350°C in such a way as to obtain a material thickness lying between 0.1 and 5 mm and, finally, the aluminium sheath is removed by shearing.

4. Assembly method according to Claim 1, in which, at stage a, after weighing the basic powders, mixing is carried out in a turbulent mixer and, at stage b, the mixture of powders is subjected to isostatic compression in a latex envelope in such a way as to obtain a billet, then rolling is carried out at 20°C so as to obtain an intermetallic thickness lying between 0.1 and 5 mm.

5. Assembly method according to one of Claims 1 to 4 in which, at stage e, the temperature of the treatment is above 0.8 T_{f}, T_{f} being the absolute melting temperature of the said intermetallic compound.

6. Assembly method according to any one of Claims 1 to 5 in which, at stage c, the elements to be assembled are prepared by machining followed by cleaning then the intermediate element of filler material is inserted between the two elements to be assembled and the assembly is arranged in a mild-steel casing leaving very slight clearance, less than 0.5%, then a vacuum is produced in the casing and a leaktight seal is formed and, at stage d, the reactive-sintering treatment is carried out in the furnace at 600°C for one hour, without pressure, and at stage d, the diffusion treatment is carried out at 1200°C for three hours, without pressure, the assembly then being removed from the sheath.

7. Assembly method according to any one of Claims 1 to 5 in which, at stage c, the elements to be assembled are prepared by machining followed by cleaning then the intermediate element of filler material is inserted between the elements to be assembled and the assembly is arranged in a titanium casing in which a vacuum is produced, then a leaktight seal is farmed and, at stage d, the reactive-sintering treatment is carried out in the furnace at 600°C for one hour, at a pressure lying between 50 and 150 MPa and, at stage e, the diffusion treatment is carried out at 1200°C for three hours at a pressure lying between 100 and 200 MPa, the assembly then being removed from the sheath.

8. Assembly method according to any one of Claims 1 to 5 in which, at stage c, the elements to be assembled are prepared by machining followed by cleaning then the intermediate element of filler material is inserted between the elements to be assembled and the assembly is arranged in a high-temperature uniaxial compression tool, then the stages d and e are combined in a single reactive-sintering and diffusion treatment, carried out in a high-temperature uniaxial compression furnace, at a temperature of 1000°C, for two hours, at a pressure lying between 50 and 150 MPa.

9. Assembly method according to any one of Claims 1 to 8, in which the two elements to be assembled are components made of TiAl and, at stage a, the basic powders are mixed after weighing in the following proportions: titanium 631g, aluminium 341g and chromium 27.4g.

10. Assembly method according to any one of Claims 1 to 8, in which the two elements to be assembled are components made of NiAl and, at stage a, the basic powders are mixed after weighing in the following proportions: nickel 685g, aluminium 314g.

11. Assembly method according to any one of Claims 1 to 8, in which the two elements to be assembled are components made of TiNi and, at stage a, the basic powders are mixed after weighing in the following proportions: nickel 551g and titanium 449g, the temperature of the reactive-sintering treatment being altered to 900°C for this assembly operation.

12. Assembly method according to any one of Claims 1 to 8, in which the two elements to be assembled are components made of FeAl and, at stage a, the basic powders are mixed after weighing in the following proportions: iron 674g and aluminium 326g, the temperature of the diffusion treatment being altered to 1100°C for this assembly operation.

13. Assembly method according to any one of Claims 1 to 8, in which the two elements to be assembled are components made of Ti₃Al and, at stage a, the basic powders are mixed after weighing in the following proportions: titanium 842g and aluminium 158g, the temperature of the diffusion treatment being altered to 1000°C for this assembling.

14. Assembly method according to Claim 13, in which the two elements to be assembled are a component made of TiAl and a component made of titanium alloy such as TA6V.

15. Assembly method according to Claim 14 in which the intermediate element inserted between the surfaces of the components to be assembled consists of three superimposed layers of filler material, with the composition TiAl, Ti₃Al and Ti respectively.

16. Assembly method according to Claim 14 in which the intermediate element inserted between the surfaces of the components to be assembled consists of two superimposed layers of filler material, the composition of which is chosen from the group TiAl, Ti₃Al and Ti respectively.

17. Method of producing a coating consisting of an intermetallic material taken from the group TiAl, NiAl, Ti₃Al, FeAl, TiNi on a component, comprising the stages defined by any one of Claims 1 to 8, in which, at stage c, the filler material is placed on the component to be coated.

18. Method of carrying out a repair by adding an intermetallic filler material taken from the group TiAl, NiAl, Ti₃Al, FeAl, TiNi onto a component comprising the stages defined by any one of Claims 1 to 8, in which, at stage c, the filler material is deposited in the region of the component to be repaired.

## Patentansprüche

1. Verfahren zum Verbinden von zwei Elementen, von denen mindestens eins aus einem intermetallischem Material besteht, mit den folgenden Verfahrensschritten:
a) Vermischen von Elementpulvern zur Herstellung einer Gesamtzusammensetzung, die derjenigen einer intermetallischen Verbindung der gleichen Art wie das genannte intermetallische Material entspricht,
b) Verdichtung und Formung eines Zwischenelements aus dem in Schritt a) hergestellten Gemisch bei einer niedrigeren Temperatur als der Reaktionssinterungstemperatur der Verbindung,
c) Anordnen dieses Zwischenelements zwischen den Oberflächen der zu verbindenden Elemente,
d) Bearbeitung der in Schritt c) hergestellten Gesamtanordung im Ofen in einem ersten Wärmebehandlungszyklus, dessen Bedingungen hinsichtlich Temperatur, Druck und Zeitdauer dergestalt bestimmt sind, daß eine Reaktionssinterung des Zwischenelements und eine Verfestigung der Verbindung erzielt wird,
e) Diffusionsbehandlung im Ofen in einem zweiten Wärmebehandlungszyklus bei einer höheren Temperatur als in Schritt d) und unter Bedingungen, die so festgelegt wurden, daß die Verbindung mechanisch verfestigt wird.

2. Verbindungsverfahren nach Anspruch 1, wobei in Schritt a) nach Abwiegen der Elementarpulver das Vermischen in einem Verwirbler erfolgt, und in Schritt b) die Verdichtung durch Zusammenpressen des Gemischs in einer Achsrichtung durchgefüht wird, so daß Platten von 2 mm Dicke entstehen, was zwischen 0,5 und 5 mm liegt.

3. Verbindungsverfahren nach Anspruch 1, wobei in Schritt a) nach Abwiegen der Elementarpulver das Vermischen in einem Verwirbler erfolgt, und in Schritt b) das Pulvergemisch in einer Latexhülle einem isostatischen Pressen dergestalt unterzogen wird, daß ein Pulverpreßbarren erzielt wird, sodann ein Einhüllen des Preßlings in Aluminium mit einer Dicke von 10 mm erfolgt und daraufhin ein Strangpressen bei 350 °C, gefolgt von einem Beschichten bei 350 °C, so daß eine Materialdicke von 0,1 bis 5 mm erzielt wird, und schließlich die Aluminiumhülle durch Scherschneiden entfernt wird.

4. Verbindungsverfahren nach Anspruch 1, wobei in Schritt a) nach Abwiegen der Elementarpulver das Vermischen in einem Verwirbler erfolgt, und in Schritt b) das Pulvergemisch in einer Latexhülle einem isostatischen Pressen dergestalt unterzogen wird, daß ein Preßbarren erzielt wird, sodann ein Beschichten bei 20 °C erfolgt, so daß eine intermetallische Dicke von 0,1 bis 5 mm erzielt wird.

5. Verbindungsverfahren nach einem der Ansprüche 1 bis 4, wobei in Schritt e) die Bearbeitungstemperatur höher ist als 0,8 T_{f}, wobei T_{f} der absolute Schmelzpunkt der genannten intermetallischen Verbindung ist.

6. Verbindungsverfahren nach einem der Ansprüche 1 bis 5, wobei in Schritt c) die zu verbindenden Elemente durch Bearbeitung und eine darauf folgende Reinigung vorbereitet werden, sodann das Zwischenelement aus Zusatzstoff zwischen die beiden zu verbindenden Elemente eingefügt wird und das Ganze in einer Umhüllung aus weichem Stahl angeordnet wird, wobei ein sehr geringes Spiel gelassen wird, das weniger als 0,5 % beträgt, sodann in der Umhüllung ein Vakuum hergestellt wird und ein dichter Verschluß hergestellt wird, und in Schritt d) die Reaktionssinterung im Ofen bei 600 °C eine Stunde lang drucklos durchgeführt wird, und in Schritt e) die Diffusionsbehandlung bei 1200 °C drei Stunden lang drucklos durchgeführt wird, wonach das Ganze dann enthüllt wird.

7. Verbindungsverfahren nach einem der Ansprüche 1 bis 5, wobei in Schritt c) die zu verbindenden Elemente durch Bearbeitung und eine darauf folgende Reinigung vorbereitet werden, sodann das Zwischenelement aus Zusatzstoff zwischen die beiden zu verbindenden Elemente eingefügt wird und das Ganze in einer Umhüllung aus Titan angeordnet wird, in der ein Vakuum hergestellt wird und dann ein dichter Verschluß hergestellt wird, und in Schritt d) die Reaktionssinterung im Ofen bei 600 °C eine Stunde lang bei einem Druck von 50 bis 150 Mpa durchgeführt wird, und in Schritt e) die Diffusionsbehandlung bei 1200 °C drei Stunden lang bei einem Druck von 100 bis 200 Mpa durchgeführt wird, wonach das Ganze dann enthüllt wird.

8. Verbindungsverfahren nach einem der Ansprüche 1 bis 5, wobei in Schritt c) die zu verbindenden Elemente durch Bearbeitung und eine darauf folgende Reinigung vorbereitet werden, sodann das Zwischenelement aus Zusatzstoff zwischen die beiden zu verbindenden Elemente eingefügt wird und das Ganze in einem Werkzeug zum Warmpressen in einer Achsrichtung angeordnet wird, sodann die Schritte d) und e) in einer einzigen Reaktionssinterungs- und Diffusionsbehandlung vereint werden, die in einem Ofen zum Warmpressen in einer Achsrichtung bei einer Temperatur von 1000 °C zwei Stunden lang bei einem Druck von 50 bis 150 Mpa durchgeführt wird.

9. Verbindungsverfahren nach einem der Ansprüche 1 bis 8, wobei die beiden zu verbindenden Elemente Werkstücke aus TiAl sind und in Schritt a) die Elementarpulver nach dem Abwiegen in folgenden Verhältnissen gemischt werden: 631 g Titan, 341g Aluminium und 27,4g Chrom.

10. Verbindungsverfahren nach einem der Ansprüche 1 bis 8, wobei die beiden zu verbindenden Elemente Werkstücke aus NiAl sind und in Schritt a) die Elementarpulver nach dem Abwiegen in folgenden Verhältnissen gemischt werden: 685 g Nickel, 314 g Aluminium.

11. Verbindungsverfahren nach einem der Ansprüche 1 bis 8, wobei die beiden zu verbindenden Elemente Werkstücke aus TiNi sind und in Schritt a) die Elementarpulver nach dem Abwiegen in folgenden Verhältnissen gemischt werden: 551 g Nickel und 449 g Titan, wobei die Temperatur der Reaktionssinterung bei dieser Verbindung auf 900 °C geändert wird.

12. Verbindungsverfahren nach einem der Ansprüche 1 bis 8, wobei die beiden zu verbindenden Elemente Werkstücke aus FeAl sind und in Schritt a) die Elementarpulver nach dem Abwiegen in folgenden Verhältnissen gemischt werden: 674g Eisen und 326g Aluminium, wobei die Temperatur der Diffusionsbehandlung bei dieser Verbindung auf 1100 °C geändert wird.

13. Verbindungsverfahren nach einem der Ansprüche 1 bis 8, wobei die beiden zu verbindenden Elemente Werkstücke aus Ti₃Al sind und in Schritt a) die Elementarpulver nach dem Abwiegen in folgenden Verhältnissen gemischt werden: 842 g Titan und 158 g Aluminium, wobei die Temperatur der Diffusionsbehandlung bei dieser Verbindung auf 1000 °C geändert wird.

14. Verbindungsverfahren nach Anspruch 13, wobei die beiden zu verbindenden Elemente ein Werkstuck aus TiAl und ein Werkstück aus einer Titanlegierung wie z. B. TA6V sind.

15. Verbindungsverfahren nach Anspruch 14, wobei das Zwischenelement, das zwischen den Oberflächen der beiden zu verbindenden Elemente eingefügt wird, aus drei übereinanderliegenden Schichten von Zusatzmaterial mit der Zusammensetzung TiAl, Ti₃Al bzw. Ti besteht.

16. Verbindungsverfahren nach Anspruch 14, wobei das Zwischenelement, das zwischen den Oberflächen der beiden zu verbindenden Elemente eingefügt wird, aus zwei übereinanderliegenden Schichten von Zusatzmaterial besteht, dessen Zusammensetzung jeweils aus der Gruppe
TiAl, Ti₃Al und Ti gewählt ist.

17. Verfahren zur Herstellung einer Beschichtung, die aus einem intermetallischen Material aus der Gruppe TiAl, NiAl, Ti₃Al, FeAl, TiNi besteht, aufeinem Werkstück, bestehend aus den Verfahrensschritten, die in einer beliebigen der Ansprüche 1 bis 8 definiert sind, wobei in Schritt c) das Zusatzmaterial auf das zu beschichtende Werkstück aufgebracht wird.

18. Verfahren zur Ausführung einer Reparatur durch Hinzufügen eines intermetallischen Materials aus der Gruppe TiAl, NiAl, Ti₃Al, FeAl, TiNi auf ein Werkstück, bestehend aus den Verfährensschritten, die in einer beliebigen der Ansprüche 1 bis 8 definiert sind, wobei in Schritt c) das Zusatzmaterial in dem zu reparierendem Werkstückbereich aufgebracht wird.
